# EUROPÄISCHE PATENTSCHRIFT

(11) **EP 3 583 388 B1**
(45) Veröffentlichungstag und Bekanntmachung des Hinweises auf die Patenterteilung: **24.05.2023**
(21) Anmeldenummer: 18704948.1
(22) Anmeldetag: 07.02.2018
(51) Int. Cl.: G01D 5/14

(54) **SENSOREINRICHTUNG**
SENSOR DEVICE
DISPOSITIF DE DÉTECTION

(30) Priorität: 15.02.2017 DE 102017202365
(43) Veröffentlichungstag der Anmeldung: 25.12.2019
(73) Patentinhaber: Robert Bosch GmbH, 70442 Stuttgart (DE)
(72) Erfinder: WELSCH, Wolfgang, 69121 Heidelberg (DE); KLEINKNECHT, Michael, 74251 Lehrensteinsfeld (DE); FELLA, Sina, 74243 Langenbrettach (DE)
(86) Internationale Anmeldenummer: PCT/EP2018/053060
(87) Internationale Veröffentlichungsnummer: WO 2018/149712

(56) Entgegenhaltungen:
- DE-A1-102009 055 104
- DE-A1-102011 083 948
- US-A- 5 313 182
- US-A1- 2002 079 888
- US-A1- 2003 145 663
- US-A1- 2015 354 984

## Beschreibung

Die Erfindung betrifft eine Sensoreinrichtung mit einem in einer, insbesondere nur einer, Bewegungsrichtung verlagerbaren Geberelement und mit zumindest zwei gehäusefesten magnetfeldsensitiven Sensoren zur Bestimmung einer Position und/oder Verlagerung des Geberelements, wobei das Geberelement eine erste Magnetanordnung aufweist, die entlang der Bewegungsrichtung des Geberelements unterschiedlich ausgerichtete Magnetfelder aufweist.

### Stand der Technik

Aus dem Stand der Technik sind Sensoreinrichtungen der eingangs genannten Art bereits bekannt. So offenbart beispielsweise die Offenlegungsschrift DE 199 37 206 C2 eine Sensoreinrichtung mit einer aus mehreren Magneten bestehenden Magnetanordnung, deren Nord- und Südpole unterschiedlich ausgerichtet sind, sodass sich entlang der Magnetanordnung unterschiedlich ausgerichtete Magnetfelder ergeben. Durch zwei magnetsensitive Sensoren werden die Magnetfelder erfasst, wobei die Ausgangssignale der Sensoren in ein Verhältnis zueinander gesetzt werden, um ein Summen- und/oder Differenzsignal zu erhalten, aus welchem die Position der Magnetanordnung in Bezug auf die Sensoren feststellbar ist. Ähnliche Sensoreinrichtungen gehen auch bereits aus der DE 10 2009 055 104 A1 sowie aus der EP 0 997 706 B1 hervor.

Die Patentschrift US 5,313,182 A offenbart eine Sensoreinrichtung mit zwei Magnetkreisen, wobei in einem Luftspalt zwischen den Magnetkreisen zwei magnetfeldsensitive Sensoren angeordnet sind. Die Offenlegungsschrift US 2002/079888 A1 beschreibt eine Sensoreinrichtung, deren Messwertgeber eine Vielzahl von Magneten aufweist, die in einem zweidimensionalen Gitter angeordnet sind. Das Gitter weist mehrere Reihen und rechtwinklig zu den Reihen verlaufende Spalten auf, wobei die Magneten derart ausgebildet sind, dass jede der Reihen und jede der Spalten jeweils als Halbach-Array ausgebildet ist. Die Offenlegungsschrift DE 10 2011 083 948 A1 beschreibt eine Sensoreinrichtung zum Bestimmen einer relativen Drehung von zwei zueinander koaxial angeordneten Wellen mittels magnetfeldsensitiver Sensoren. Die Offenlegungsschrift US 2015/0354984 A1 offenbart eine weitere Sensoreinrichtung. Diese weist eine kreisförmige Magnetanordnung und drei magnetfeldsensitive Sensoren auf, wobei die Sensoren entweder oberhalb oder unterhalb der Magnetanordnung angeordnet sind. Die Offenlegungsschrift US 2003/0145663 A1 offenbart eine weitere Sensorvorrichtung im Stand der Technik.

### Offenbarung der Erfindung

Die erfindungsgemäße Sensoreinrichtung mit den Merkmalen des Anspruchs 1 hat den Vorteil, dass unabhängig von einem externen homogenen Streufeld die Position des Geberelements eindeutig detektierbar ist. Durch die erfindungsgemäße Ausführung der Sensoreinrichtung können große Messwege erreicht und auch ein konstantes Ausgangssignal im sogenannten Klemmbereich ermöglicht werden. Erfindungsgemäß ist hierzu vorgesehen, dass das Geberelement eine zweite Magnetanordnung aufweist, die entlang der Bewegungsrichtung des Geberelements unterschiedlich ausgerichtete Magnetfelder aufweist. Es sind somit zwei Magnetanordnungen vorhanden, die entlang der Bewegungsrichtung des Geberelements unterschiedliche Magnetfeldausrichtungen aufweisen. Dabei ist vorgesehen, dass entlang des Geberelements die Magnetanordnungen unterschiedliche Ausrichtungen aufweisen. Durch eine entsprechende Positionierung der Sensoren sind dabei bei einer Verschiebung insbesondere Bewegung des Geberelements in Bewegungsrichtung eine Magnetfeldveränderung beziehungsweise einer Veränderung der Magnetfeldausrichtung der beiden Magnetanordnungen feststellbar, die auf eine eindeutige Position des Geberelements schließen lässt. Insbesondere in der Ausführung als Differenzsensor ist damit eine eindeutige Positionserfassung des Geberelements gewährleistet, das beispielsweise mechanisch mit einem Aktorelement eines Aktuators, dessen Position überwacht werden soll, verbunden ist.

Erfindungsgemäß unterscheiden sich die Ausrichtungen der Magnetanordnungen entlang des Geberelements voneinander.

Dadurch ist eine eindeutige Positionsbestimmung des Geberelements in der Bewegungsrichtung sicher gewährleistet. Dadurch, dass sich die Ausrichtungen entlang des Geberelements unterscheiden, sind die Magnetfelder auf gleicher Höhe des Geberelements - in Bewegungsrichtung gesehen - unterschiedlich ausgerichtet, wodurch die eindeutige Positionsbestimmung möglich ist.

Weiterhin ist bevorzugt vorgesehen, dass die Magnetanordnungen als Magnetbahnen an dem Geberelement angeordnet/ausgebildet sind. Dort erstrecken sich die Magnetanordnungen jeweils bahnförmig, insbesondere linear, über das Geberelement und können entsprechend in Bewegungsrichtung von den Sensoren sicher detektiert werden.

Weiterhin ist bevorzugt vorgesehen, dass die Magnetanordnungen nebeneinander auf dem Geberelement angeordnet/ausgebildet sind. Damit sind die Magnetanordnungen auf einer Seite des Geberelements nebeneinanderliegend angeordnet, sodass die Sensoren der gleichen Seite des Geberelements zugeordnet sind, um die jeweiligen Magnetfelder zu erfassen. Dadurch wird ein konstruktiv einfaches und kostengünstiges Geberelement realisiert.

Die Sensoren sind erfindungsgemäß jeweils einer der Magnetanordnungen zugeordnet, sodass jeder der Sensoren jeweils eine der Magnetanordnungen überwacht beziehungsweise die Magnetfelder jeweils einer der Magnetanordnungen erfasst. Dadurch ist eine eindeutige Auswertung der Magnetfelder sicher gewährleistet.

Bevorzugt ist vorgesehen, dass die Sensoren in Bewegungsrichtung nebeneinanderliegend angeordnet sind, sodass sie auf gleicher Höhe - in Bewegungsrichtung gesehen - nebeneinanderliegen, um die Magnetfelder zu erfassen. Dadurch ist eine kompakte Ausführungsform der Sensoreinrichtung gewährleistet. Alternativ sind die Sensoren bevorzugt in Bewegungsrichtung versetzt zueinander beziehungsweise beabstandet zueinander angeordnet oder in einem vorgebbaren Messwinkel zur Messrichtung, um ein genaues Messergebnis zu erzielen.

Weiterhin ist bevorzugt vorgesehen, dass sich die Ausrichtung der Magnetfelder schrittweise verändert oder kontinuierlich. Durch die schrittweise Veränderung der Ausrichtung ist eine einfache Ausführungsform der jeweiligen Magnetanordnung gewährleistet, die auch kostengünstig realisierbar ist. Insbesondere kann die jeweilige Magnetanordnung dabei durch mehrere Einzelmagneten hergestellt werden, die hintereinander angeordnet werden/sind. Die kontinuierliche Veränderung der Ausrichtung der Magnetfelder erlaubt eine höhere Auflösung der Sensoreinrichtung und damit eine genaue Positionsbestimmung und ist beispielsweise durch eine helixförmige Aufmagnetisierung eines Magnetkörpers möglich und bevorzugt vorgesehen.

Weiterhin ist bevorzugt vorgesehen, dass die jeweilige Magnetanordnung aus mehreren Magnetelementen gebildet ist. Wie bereits erwähnt, ist hierbei eine kostengünstige Realisierung der jeweiligen Magnetanordnung mit insbesondere schrittweiser Veränderung der Ausrichtung der Magnetfelder möglich. Die Magnetelemente sind dabei bevorzugt an einem Grundkörper des Geberelements angeordnet, beispielsweise angeklebt oder formschlüssig oder reifschlüssig an dem Grundkörper gehalten. Die einzelnen Magnetelemente können dabei direkt aneinander anliegen oder beabstandet zueinander angeordnet sein, sodass zwischen ihnen ein Spalt, insbesondere Luftspalt, besteht.

Weiterhin ist bevorzugt vorgesehen, dass die jeweilige Magnetanordnung aus einem unterschiedlich aufmagnetisierten Magnetfeldkörper gebildet ist. Damit ist die jeweilige Magnetanordnung einteilig aus einem Magnetfeldgeber beziehungsweise Magnetfeldkörper gefertigt, der insbesondere durch die vorteilhafte Aufmagnetisierung eine Veränderung der Ausrichtung der Magnetfelder entlang seiner Längserstreckung beziehungsweise in Bewegungsrichtung des Geberelements aufweist.

Gemäß einer besonders bevorzugten Ausführungsform der Erfindung ist vorgesehen, dass die Magnetanordnungen aus einem einzigen aufmagnetisierten Magnetfeldkörper gebildet sind. Dadurch wird ein besonders kompaktes Geberelement realisiert. Gemäß einer weiteren Ausführungsform weist die Sensoreinrichtung beziehungsweise das Geberelement mehr als zwei Magnetanordnungen mit unterschiedlich ausgerichteten Magnetfeldern entlang der Bewegungsrichtung auf.

Erfindungsgemäß ist das Geberelement linear verschiebbar gelagert. Dazu weist die Sensoreinrichtung zweckmäßigerweise ein Gehäuse auf, in welchem das Geberelement verschiebbar gelagert ist, und welches die Sensoren trägt. Gemäß einer alternativen, nicht erfindungsgemäßen Ausführungsform ist bevorzugt vorgesehen, dass das Geberelement drehbar in dem Gehäuse gelagert ist, wobei dann die Magnetanordnung sich bevorzugt über den Außenumfang eines dann insbesondere kreisförmigen Grundkörpers des Geberelements in Umfangsrichtung erstrecken. Durch die Sensoreinrichtung ist somit sowohl eine Linearbewegung und/oder Position als auch eine Drehbewegung und/oder - Position (Winkellage) auf vorteilhafte Weise detektierbar.

Im Folgenden soll die Erfindung anhand der Zeichnungen näher erläutert werden. Dazu zeigt die einzige
- Figur: eine vorteilhafte Sensoreinrichtung in einer vereinfachten Darstellung.

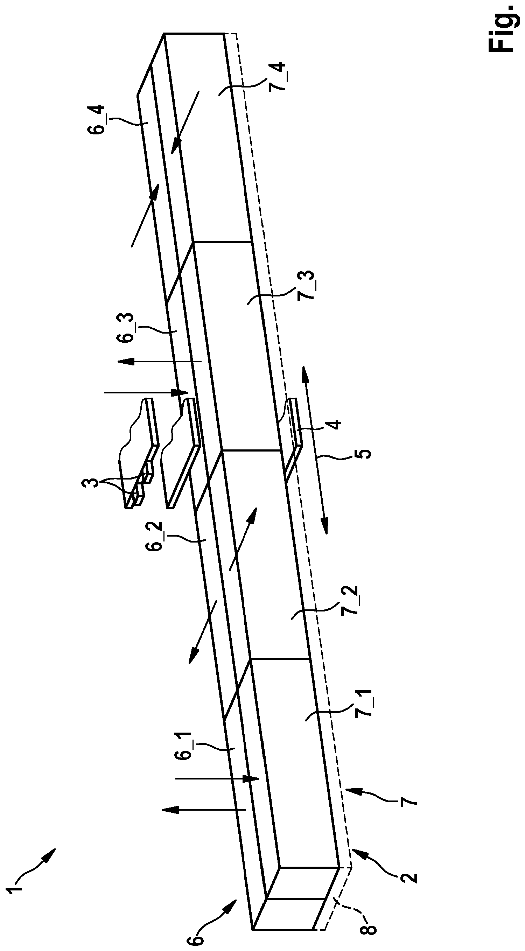

Die Figur zeigt in einer vereinfachten perspektivischen Darstellung eine Sensoreinrichtung 1, die ein Geberelement 2 und zwei Sensoren 3 aufweist. Weiterhin weist die Sensoreinrichtung 1 ein Gehäuse 4 auf, das vorliegend nur teilweise gezeigt ist. Das Gehäuse 4 dient einerseits zum Lagern des bewegbaren Geberelements 2 und andererseits zum Halten der Sensoren 3, sodass das Geberelement 2 relativ zu den ortsfest beziehungsweise gehäusefest angeordneten Sensoren 3 bewegbar ist. Gemäß dem vorliegenden Ausführungsbeispiel ist dabei vorgesehen, dass das Geberelement 2 linear beziehungsweise translatorisch in dem Gehäuse 4 bewegbar ist, wie durch einen Doppelpfeil 5 gezeigt. Das Geberelement 2 ist dabei vorliegend im Wesentlichen stabförmig ausgebildet, und ist in seiner Längserstreckung gemäß Pfeil 5 in dem Gehäuse 4 verschiebbar.

Das Geberelement 2 weist eine erste Magnetanordnung 6 und eine zweite Magnetanordnung 7 auf, die jeweils eine Magnetbahn bilden. Die Magnetbahnen liegen dabei nebeneinander in Bewegungsrichtung des Geberelements 2 gesehen. Jede Magnetanordnung 6, 7 weist gemäß dem vorliegenden Ausführungsbeispiel mehrere Magnetelemente 6_1, 6_2, 6_3 und 6_4 beziehungsweise 7_1, 7_2, 7_3 und 7_4 auf. Die Magnetelemente 6_1 bis 7_4 sind dabei bevorzugt direkt aneinander befestigt, beispielsweise verklebt, oder an einem gemeinsamen Grundkörper 8, in der Figur nur gestichelt als Option gezeigt, befestigt.

Die Magnetelemente 6_1 bis 7_4 sind dabei derart ausgebildet und ausgerichtet, dass jede Magnetanordnung 6, 7 in Bewegungsrichtung gesehen Magnetfelder mit unterschiedlicher Ausrichtung aufweisen, wie beispielsweise durch Pfeile in der Figur angezeigt. Dabei unterscheiden sich die Ausrichtungen der benachbarten Magnetanordnungen 6 und 7 voneinander, sodass auf gleicher Höhe - in Bewegungsrichtung des Geberelements 2 gesehen - Magnetfelder mit unterschiedlichen Ausrichtungen nebeneinander liegen.

Die beiden Sensoren 3 sind in Bewegungsrichtung gesehen nebeneinander angeordnet, sodass der eine Sensor 3 der ersten Magnetanordnung 6 und der zweite Sensor 3 der zweiten Magnetanordnung 7 zugeordnet ist, um das jeweilige Magnetfeld und dessen Ausrichtung zu erfassen.

Ein hier nicht dargestelltes Steuergerät überwacht dabei die Ausgangssignale der Sensoren 3 und führt diese zu einem Summen-Signal oder erfindungsgemäß zu einem Differenz-Signal zusammen, um die Position des Geberelements 2 in Bezug auf die Sensoren 3 zu ermitteln. Weil die Magnetanordnungen 6, 7 jeweils unterschiedliche Ausrichtungen der Magnetfelder voneinander aufweisen, ist eine eindeutige Positionsbestimmung des Geberelements 6 mit hoher Genauigkeit durchführbar. Wird das Geberelement 2 gemäß Pfeil 5 relativ zu den Sensoren 3 bewegt, so verändern sich die von den Sensoren 3 erfassten Magnetfelder und Magnetfeldausrichtungen aus dem vorliegenden Ausführungsbeispiel schrittweise gemäß der vier Magnetelemente 6_1 bis 6_4 beziehungsweise 7_1 bis 7_4.

Gemäß einem alternativen Ausführungsbeispiel ist vorgesehen, dass die Ausrichtung der Magnetfelder in Bewegungsrichtung sich kontinuierlich oder in besonders kleinen Schritten verändert, um eine hochauflösende Positionsbestimmung zu gewährleisten. Alternativ zu den Magnetanordnungen 6, 7 aus einzelnen Magnetelementen ist es auch denkbar, einen Magnetkörper für jede Magnetanordnung 6, 7 vorzusehen, der derart aufmagnetisiert ist, dass er ein sich in Längserstreckung in seiner Ausrichtung veränderndes Magnetfeld aufweist. Dazu ist beispielsweise der jeweilige Magnetkörper helixförmig aufmagnetisiert.

Die Sensoren 3 sind insbesondere als Hall- oder XMR-Sensoren ausgebildet und bestimmen insbesondere den Differenzwinkel der Magnetfelder an der Messstelle der Sensoren 3, die wie bereits gesagt nebeneinander beziehungsweise quer zur Messrichtung angeordnet sind.

## Patentansprüche

1. Sensoreinrichtung (1) mit einem in einer Bewegungsrichtung verlagerbaren Geberelement (2), mit mindestens zwei gehäusefesten magnetfeldsensitiven Sensoren (3) zur Bestimmung einer Position und/oder Bewegung des Geberelements (2), und mit einem Steuergerät, das dazu ausgebildet ist, Ausgangssignale der Sensoren (3) zu überwachen und diese zu einem Differenz-Signal zusammenzuführen, wobei das Geberelement (2) in Bewegungsrichtung linear verschiebbar gelagert ist, wobei das Geberelement (2) eine erste Magnetanordnung (6) aufweist, die entlang der Bewegungsrichtung des Geberelements (2) unterschiedlich ausgerichtete Magnetfelder aufweist, wobei das Geberelement (2) eine zweite Magnetanordnung (7) aufweist, die entlang der Bewegungsrichtung des Geberelements (2) unterschiedlich ausgerichtete Magnetfelder aufweist, wobei die Sensoren (3) jeweils einer der Magnetanordnungen (6,7) zugeordnet sind, und wobei sich die Ausrichtungen der Magnetfelder der Magnetanordnungen (6,7) entlang des Geberelements (2) voneinander unterscheiden.

2. Sensoreinrichtung nach Anspruch 1, **dadurch gekennzeichnet, dass** die Magnetanordnungen (6,7) als Magnetbahnen an dem Geberelement (2) angeordnet/ausgebildet sind.

3. Sensoreinrichtung nach einem der vorhergehenden Ansprüche, **dadurch gekennzeichnet, dass** die Magnetanordnungen (6,7) nebeneinander auf einer Seite des Geberelements (2) angeordnet/ausgebildet sind.

4. Sensoreinrichtung nach einem der vorhergehenden Ansprüche, **dadurch gekennzeichnet, dass** die Sensoren (3) in Bewegungsrichtung des Geberelements (2) gesehen nebeneinander, in Bewegungsrichtung versetzt zueinander oder in einem vorgebbaren Winkel zur Messrichtung angeordnet sind.

5. Sensoreinrichtung nach einem der vorhergehenden Ansprüche, **dadurch gekennzeichnet, dass** sich die Ausrichtung der Magnetfelder schrittweise verändert oder kontinuierlich.

6. Sensoreinrichtung nach einem der vorhergehenden Ansprüche, **dadurch gekennzeichnet, dass** die jeweilige Magnetanordnung (6,7) aus mehreren Magnetelementen (6_1 bis 7_4) gebildet ist.

7. Sensoreinrichtung nach einem der vorhergehenden Ansprüche, **dadurch gekennzeichnet, dass** die jeweilige Magnetanordnungen (6,7) aus einem unterschiedlich aufmagnetisierten Magnetfeldkörper gebildet ist.

8. Sensoreinrichtung nach einem der vorhergehenden Ansprüche, **dadurch gekennzeichnet, dass** die Magnetanordnungen (6,7) aus einem einzigen aufmagnetisierten Magnetfeldkörper gebildet sind.

## Claims

1. Sensor apparatus (1) having an encoder element (2), which is able to be displaced in a direction of movement, having at least two sensors (3), which are fixed to the housing and are magnetic field-sensitive, for determining a position and/or movement of the encoder element (2), and having a control device, which is designed to monitor output signals of the sensors (3) and to combine them to form a difference signal, wherein the encoder element (2) is mounted such that it is able to be displaced linearly in the direction of movement, wherein the encoder element (2) has a first magnet arrangement (6), which has differently oriented magnetic fields along the direction of movement of the encoder element (2), wherein the encoder element (2) has a second magnet arrangement (7), which has differently oriented magnetic fields along the direction of movement of the encoder element (2), wherein the sensors (3) are each assigned to one of the magnet arrangements (6, 7), and wherein the orientations of the magnetic fields of the magnet arrangements (6, 7) along the encoder element (2) differ from each other.

2. Sensor apparatus according to Claim 1, **characterized in that** the magnet arrangements (6, 7) are arranged as/in the form of magnetic tracks on the encoder element (2).

3. Sensor apparatus according to either of the preceding claims, **characterized in that** the magnet arrangements (6, 7) are arranged/designed so as to be next to one other on one side of the encoder element (2).

4. Sensor apparatus according to one of the preceding claims, **characterized in that** the sensors (3) are arranged next to one another as viewed in the direction of movement of the encoder element (2), offset in relation to one another in the direction of movement, or at a predefinable angle to the measurement direction.

5. Sensor apparatus according to one of the preceding claims, **characterized in that** the orientation of the magnetic fields changes incrementally or continuously.

6. Sensor apparatus according to one of the preceding claims, **characterized in that** the respective magnet arrangement (6, 7) is formed from a plurality of magnetic elements (6_1 to 7_4).

7. Sensor apparatus according to one of the preceding claims, **characterized in that** the respective magnet arrangement (6, 7) is formed from a differently magnetized magnetic field body.

8. Sensor apparatus according to one of the preceding claims, **characterized in that** the magnet arrangements (6, 7) are formed from a single magnetized magnetic field body.

## Revendications

1. Dispositif de détection (1) comprenant un élément transmetteur (2) qui peut être déplacé dans une direction de mouvement, au moins deux capteurs (3) sensibles au champ magnétique, fixés au boîtier et destinés à déterminer une position et/ou un mouvement de l'élément transmetteur (2) et une unité de commande qui est conçue pour surveiller les signaux de sortie des capteurs (3) et les combiner en un signal différentiel, l'élément transmetteur (2) étant monté de manière à pouvoir coulisser linéairement dans la direction de mouvement, l'élément transmetteur (2) comportant un premier ensemble d'aimants (6) qui présente des champs magnétiques d'orientations différentes suivant la direction de mouvement de l'élément transmetteur (2), l'élément transmetteur (2) comportant un deuxième ensemble d'aimants (7) qui présente des champs magnétiques d'orientations différentes suivant la direction de mouvement de l'élément transmetteur (2), les capteurs (3) étant chacun associés à l'un des ensembles d'aimants (6, 7), et les orientations des champs magnétiques des ensembles d'aimants (6, 7) différant les unes des autres le long de l'élément transmetteur (2).

2. Dispositif de détection selon la revendication 1, **caractérisé en ce que** les ensembles d'aimants (6, 7) sont disposés/conçus comme des chemins magnétiques sur l'élément transmetteur (2).

3. Dispositif de détection selon l'une des revendications précédentes, **caractérisé en ce que** les ensembles d'aimants (6, 7) sont disposés/conçus les uns à côté des autres sur un côté de l'élément transmetteur (2) .

4. Dispositif de détection selon l'une des revendications précédentes, **caractérisé en ce que** les capteurs (3) sont disposés, lorsqu'ils sont vus dans la direction de mouvement de l'élément transmetteur (2), les uns à côté des autres, et décalés les uns par rapport aux autres dans la direction de mouvement ou suivant un angle spécifiable par rapport à la direction de mesure.

5. Dispositif de détection selon l'une des revendications précédentes, **caractérisé en ce que** l'orientation des champs magnétiques change pas à pas ou en continu.

6. Dispositif de détection selon l'une des revendications précédentes, **caractérisé en ce que** l'ensemble d'aimants respectif (6, 7) est formé de plusieurs éléments magnétiques (6_1 à 7_4).

7. Dispositif de détection selon l'une des revendications précédentes, **caractérisé en ce que** l'ensemble d'aimants respectif (6, 7) est formé d'un corps de champ magnétique de différentes magnétisation.

8. Dispositif de détection selon l'une des revendications précédentes, **caractérisé en ce que** les ensembles d'aimants (6, 7) sont formés d'un seul corps de champ magnétique magnétisé.
